# FASCICULE DE BREVET EUROPEEN

(11) **EP 0 731 006 B1**
(45) Date de publication et mention de la délivrance du brevet: **03.05.2000**
(21) Numéro de dépôt: 96103462.6
(22) Date de dépôt: 05.03.1996
(51) Int. Cl.: B60R 25/02

(54) **Antivol de direction de véhicule automobile**
Lenkradschloss für Kraftfahrzeug
Steering lock for a motor vehicle

(30) Priorité: 10.03.1995 FR 9502896
(43) Date de publication de la demande: 11.09.1996
(73) Titulaire: VALEO SECURITE HABITACLE, 94000 Créteil (FR)
(72) Inventeur: Canard, Louis, 58000 Nevers (FR); Olive, Pascal, 58000 Nevers (FR)
(74) Mandataire: Kohn, Philippe

(56) Documents cités:
- DE-B- 2 644 312
- FR-A- 2 115 804
- FR-A- 2 407 843
- FR-A- 2 635 060

## Description

La présente invention concerne un antivol de direction de véhicule automobile.

L'invention concerne plus particulièrement un antivol du type, décrit et représenté dans le document FR-A-2.115.804, comportant un boîtier, monté sur la colonne de direction du véhicule, dans lequel un verrou est monté à rotation entre une position de repos dans laquelle une clef conforme peut être introduite ou retirée axialement, et au moins une position d'utilisation dans laquelle la clef ne peut être extraite du verrou, le verrou comportant un organe de sortie rotatif, lié en rotation au rotor du verrou commandé par la clef, qui commande les déplacements d'un pêne qui est monté coulissant dans le boîtier selon une direction radiale entre une position de verrouillage vers laquelle il est sollicité élastiquement et dans laquelle il fait saillie radialement dans une ouverture du boîtier pour bloquer en rotation un organe de la colonne de direction lorsque le verrou est en position de repos, clef extraite et une position escamotée à l'intérieur du boîtier, du type dans lequel le verrou est monté coulissant axialement dans le boîtier entre une position de repos vers laquelle il est rappelé élastiquement et qu'il occupe en l'absence de clef, et une position active qu'il occupe lorsqu'une clef est en position introduite dans le verrou, du type dans lequel l'organe de sortie comporte un maneton qui est susceptible de coopérer avec une came de commande formée sur le pêne pour commander les déplacements de ce dernier, et du type dans lequel le pêne comporte un doigt de blocage qui fait saillie axialement.

On connaît de nombreuses conceptions d'un antivol qui est plus fréquemment utilisé pour empêcher les vols de véhicule, et notamment les vols de voitures particulières.

De nombreux perfectionnements ont été apportés aux antivols de ce type, qui concernent notamment le verrou, afin d'améliorer la résistance de l'antivol aux différents modes d'effraction imaginés par les voleurs de véhicules.

On constate toutefois qu'il subsiste une possibilité d'effraction au cours de laquelle le voleur tente d'agir sur le pêne proprement dit pour repousser celui-ci à l'intérieur du boîtier de l'antivol et libérer la colonne de direction.

La présente invention a pour but de proposer une nouvelle conception d'un antivol de direction du type mentionné précédemment qui remédie à cet inconvénient en empêchant toute possibilité de repousser le pêne à l'intérieur du boîtier lorsque l'antivol est en position de repos, c'est-à-dire en position de blocage en rotation de la colonne de direction.

Dans ce but, l'invention propose un antivol du type mentionné précédemment, caractérisé en ce que le doigt de blocage fait saillie axialement pour être reçu dans un logement de blocage formé dans une face radiale d'extrémité en vis-à-vis de l'organe de sortie lorsque le pêne est en position de verrouillage pour empêcher tout déplacement du pêne vers sa position escamotée ; et
- en ce que le doigt de blocage est susceptible de s'effacer lors de la rotation du verrou depuis sa position de repos vers sa position d'utilisation.

Selon des caractéristiques préférentielles de l'invention :
- le doigt de blocage est monté coulissant axialement dans le pêne à l'encontre d'un ressort de rappel qui le sollicite en permanence en direction du logement de blocage ;
- le logement de blocage est un évidement formé dans ladite face radiale d'extrémité de l'organe de sortie et qui comporte une rampe qui provoque l'effacement du doigt de blocage lors de ladite rotation du verrou de manière que le doigt de blocage sorte du logement pour s'étendre alors axialement en regard d'une surface cylindrique de retenue du pêne formée sur l'organe de sortie et centrée sur l'axe de rotation de ce dernier ;
- la course maximale d'extension axiale du doigt de blocage est inférieure à la course axiale du verrou entre sa position de repos et sa position active ;
- la position axiale active du verrou est déterminée par la venue en contact de ladite face radiale d'extrémité de l'organe de sortie avec une surface de butée formée en vis-à-vis sur le pêne ;
- le maneton est formé en saillie sur ladite face radiale d'extrémité de l'organe de sortie ;
- ladite surface de butée est une portion de surface radiale formée sur une partie en surépaisseur axiale du pêne et la came de commande des déplacements du pêne est formée sur cette partie en surépaisseur ;
- un ressort hélicoïdal de compression est agencé axialement entre le pêne, et la dite surface radiale d'extrémité de l'organe de sortie pour rappeler le verrou vers sa position de repos ;
- l'organe de sortie comporte une tige coaxiale de sortie qui s'étend axialement à travers la lumière du pêne qui s'étend parallèlement à la direction de coulissement du pêne.

D'autres caractéristiques et avantages de l'invention apparaîtront à la lecture de la description détaillée qui va suivre pour la compréhension de laquelle on se reportera aux dessins annexés dans lesquels :
- La figure 1 est une vue en perspective éclatée qui illustre les principaux composants d'un antivol de direction de véhicule automobile réalisé conformément aux enseignements de l'invention, la vue représentant le boîtier de l'antivol par l'arrière ;
- la figure 2 est une vue en élévation et à plus grande échelle, selon la flèche F2 de la figure 1, qui illustre le bouchon du boîtier avec le pêne en deux parties ;
- la figure 3 est une vue axiale en bout, selon la flèche F3 de la figure 1 qui illustre la face radiale d'extrémité de l'organe de sortie du verrou ;
- la figure 4 est une vue de détail en perspective et à plus grande échelle qui illustre une partie de la face radiale d'extrémité de l'organe de sortie du verrou ainsi que le doigt de blocage avec son ressort de rappel;
- la figure 5 est une vue en perspective éclatée et à plus grande échelle du pêne en deux parties ;
- la figure 6 est une vue en perspective en section partielle selon un plan passant par l'axe de rotation du verrou qui illustre l'antivol en position de repos, clef extraite ;
- la figure 7 est une vue de détail de la figure 6 qui illustre la position axiale relative du stator du verrou par rapport au boîtier de l'antivol dans la position clef extraite ;
- la figure 8 est une vue de détail similaire à celle de la figure 7 qui illustre la position axiale active du verrou par rapport au boîtier de l'antivol en position de repos clef introduite, le pêne étant également illustré sur cette figure ;
- la figure 9 est une vue similaire à celle de la figure 6 qui illustre les différents composants dans la position angulaire d'utilisation du verrou ;
- la figure 10 est une vue similaire à celle de la figure 9 qui illustre les mêmes composants dans la même position, mais selon une autre orientation de la perspective ;
- la figure 11 est une vue similaire à celle de la figure 6 qui illustre les différents composants dans la position de repos du verrou clef non extraite ;
- la figure 12 est une vue similaire à celle de la figure 6 qui illustre les différents composants dans une position intermédiaire qu'ils occupent, après extraction de la clef lors du lâcher du pêne vers la position de blocage de la colonne de direction.

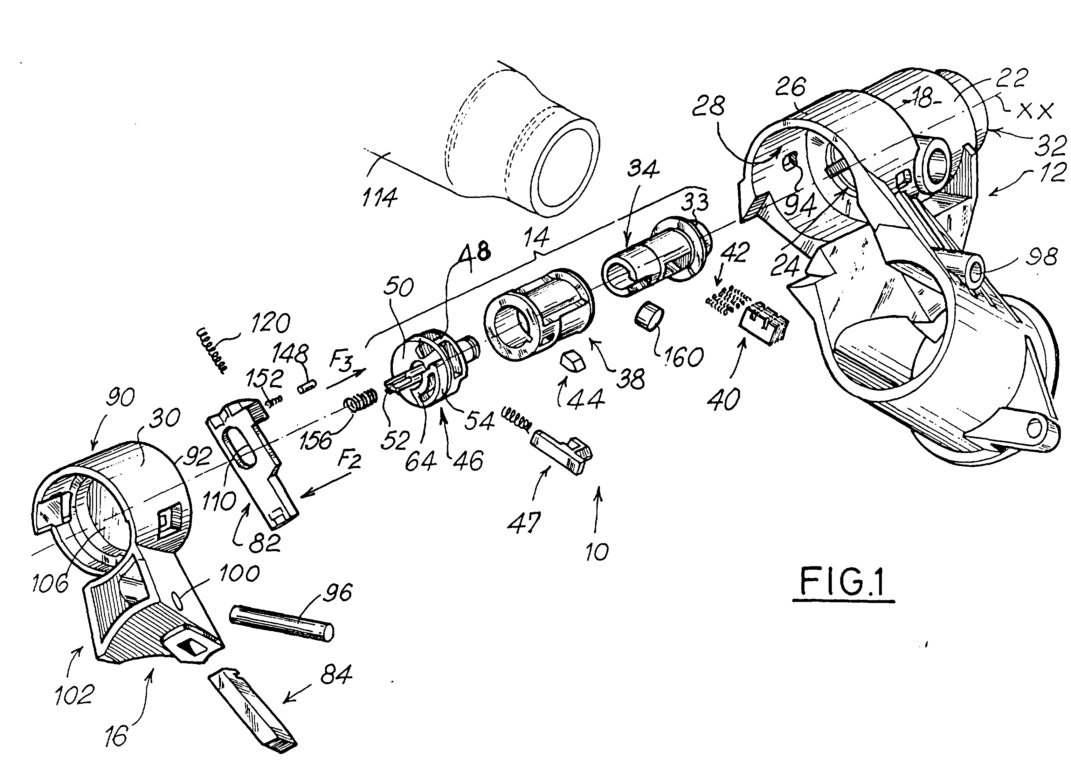

On a représenté sur la figure 1 un antivol 10 de direction de véhicule automobile qui est pour l'essentiel constitué par un boîtier 12, par un verrou 14 et par un bouchon de retenue 16.

Le boîtier d'antivol 12 est une pièce réalisée par moulage qui comporte une première partie 18 de forme générale cylindrique tubulaire qui est constituée pour l'essentiel par une jupe annulaire cylindrique 22 qui délimite un logement tubulaire creux 24 qui est prévu pour recevoir les composants du verrou 14.

La partie 18 comporte également, dans le prolongement de la jupe annulaire 22, une jupe annulaire cylindrique 26 qui détermine un logement 28 de plus grand diamètre que le logement 24 qui est prévu pour recevoir une partie cylindrique de diamètre complémentaire 30 du corps du bouchon de retenue 16.

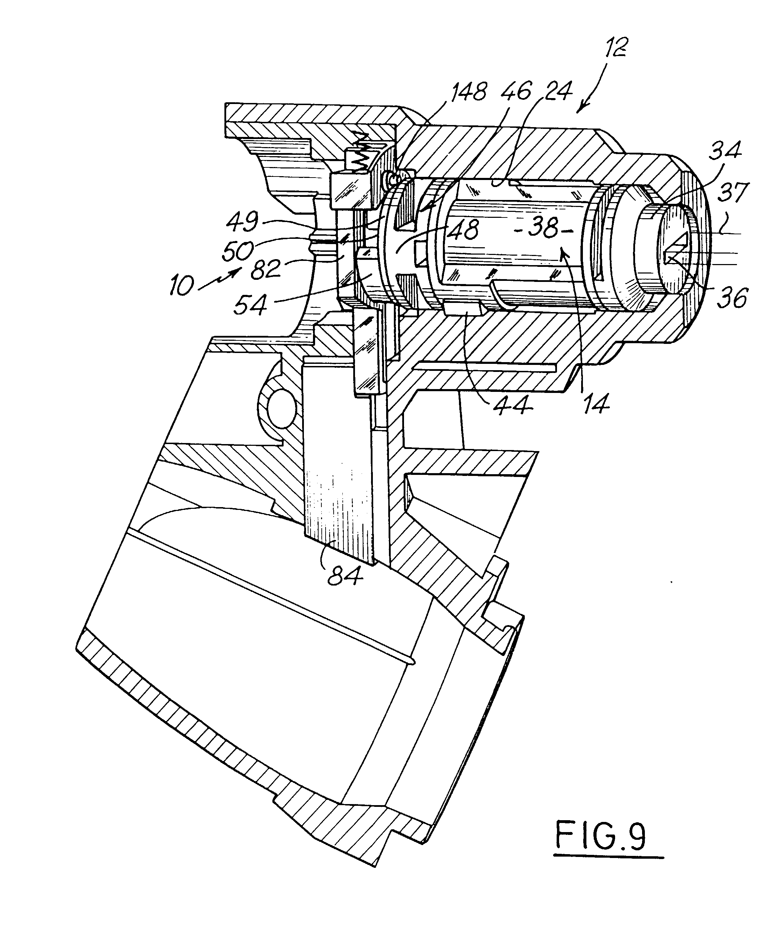

La partie 18 du boîtier 12 comporte ainsi une extrémité ouverte 32 à travers laquelle fait partiellement saillie une extrémité 33 du barillet ou rotor 34 du verrou 14 qui comporte une fente 36 (figure 9) pour l'introduction par le conducteur d'une clef 37 de commande du verrou.

Le verrou 14 est constitué pour l'essentiel par un rotor 34 qui est monté à rotation dans un stator intermédiaire 38 auquel, en l'absence d'une clef 37, il est lié en rotation par un ensemble à paillettes 40 et ressorts 42 selon une conception connue.

Le stator intermédiaire 38 est indexé en rotation par l'intermédiaire d'un doigt d'indexation 44.

Le verrou 14 comporte également un organe de sortie 46 qui est entraîné en rotation, de manière débrayable, par le rotor 34, autour de l'axe X-X du verrou 14 par l'intermédiaire d'une clavette 47.

L'agencement particulier des différents composants du verrou ne fait pas partie de la présente invention.

Le verrou 14 se présente globalement sous la forme d'un ensemble monté à rotation autour de l'axe X-X dans le logement cylindrique 24 de la partie 18 du boîtier 12 de l'antivol 10 et, en présence d'une clef conforme 37, le conducteur est susceptible de provoquer la rotation de l'organe de sortie 46 autour de son axe de rotation X-X.

L'organe de rotation 46 comporte une partie principale cylindrique 48 qui est montée à rotation dans le logement 24 et qui est délimitée axialement par une face radiale d'extrémité 50 tournée vers le bouchon 16.

Comme on peut le voir notamment sur les figures 1, 3, 4 et 6, la face d'extrémité 50 est une face radiale plane qui comporte en son centre une tige coaxiale de sortie 52 liée en rotation à l'organe de sortie 46, et donc au verrou 14, qui est susceptible de commander en rotation un commutateur électrique (non représenté) qui commande notamment la mise en marche du moteur du véhicule.

La face radiale d'extrémité 50 comporte un maneton excentré 54 qui est formé en saillie axiale par rapport à la face 50 en direction du bouchon 16.

Le maneton 54 comporte un bec de commande 56 qui se prolonge par une portion de surface cylindrique convexe 58 qui s'étend selon un secteur angulaire délimité par deux faces d'extrémité 60 et 62.

Le maneton en relief 54 est également délimité axialement par une face radiale d'extrémité 64 qui est parallèle à la face radiale d'extrémité 50 de la partie principale cylindrique 48 de l'organe de sortie 46.

Décalé angulairement par rapport au maneton 54, l'organe de sortie 46 formant vilebrequin comporte, dans sa face radiale d'extrémité 50 un logement de blocage 66.

Le logement 66 est réalisé sous la forme d'un évidement ou creusure réalisé dans la face radiale d'extrémité 50.

Le logement de blocage 66 est délimité latéralement par deux bords 68 et 70 qui s'étendent dans des plans parallèles à l'axe X-X, radialement vers l'intérieur par un fond 72 qui s'étend dans un plan parallèle à l'axe X-X et radialement vers l'extérieur par une rampe inclinée 74 qui s'étend depuis le fond 76 du logement 66 jusqu'à la paroi cylindrique convexe 49 de la partie principale 48 de l'organe de sortie 46.

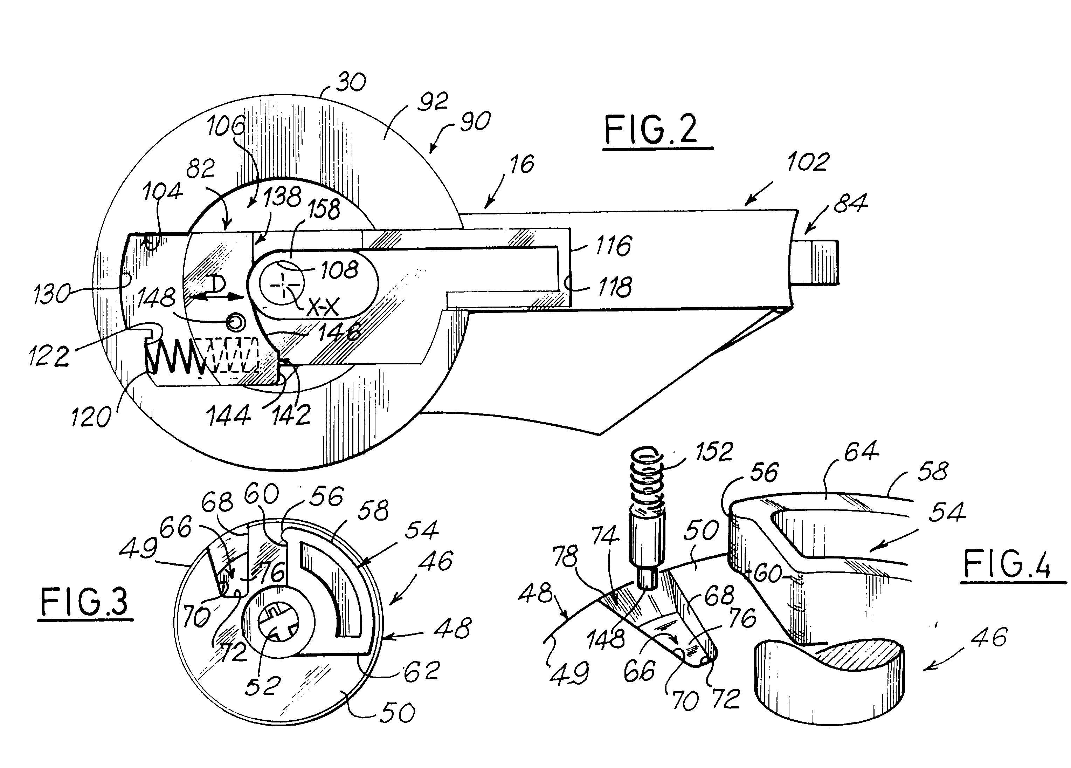

Comme on peut le voir également sur les figures 3 et 4, le bord circulaire de l'extrémité libre 78 de la rampe 74 s'étend dans le plan de la face radiale d'extrémité 50, c'est-à-dire qu'il s'étend dans le prolongement du bord circulaire de la partie principale 48 de l'organe de sortie 46 constitué par l'intersection de la surface cylindrique convexe 49 avec la face radiale d'extrémité 50.

On décrira maintenant en détail le pêne de blocage monté coulissant dans le bouchon 16.

Comme on peut le voir aux figures 1, 2 et 5, le pêne de blocage 80 est ici réalisé en deux parties 82 et 84 pour faciliter le montage des différents composants.

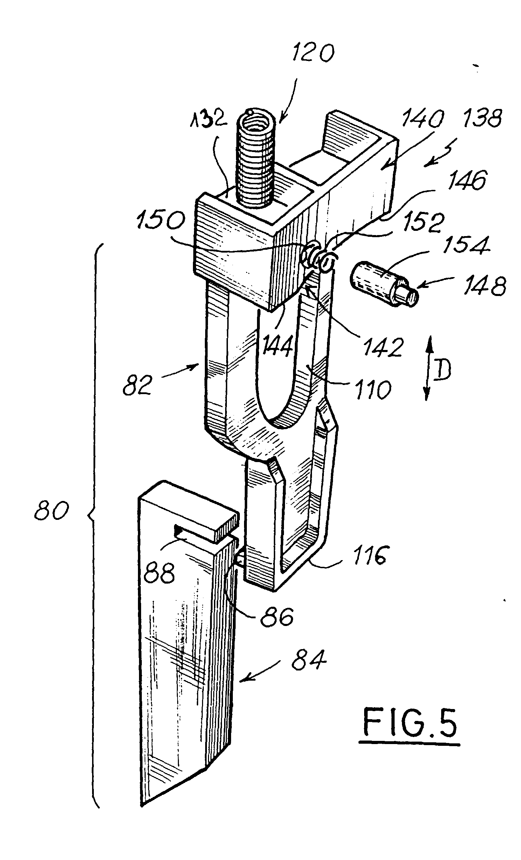

La partie 82 du pêne 80 sera par la suite appelée le coulisseau tandis que la partie 84, qui lui est liée en coulissement du fait de la coopération du cran 86 avec l'encoche 88 (voir notamment la figure 5) sera appelée par la suite l'extrémité du pêne 80.

Le bouchon 16 est une pièce massive réalisée par moulage dont la partie principale ou corps 90 présente une forme périphérique cylindrique 30 qui est reçue dans le logement 28 du boîtier 12.

Le bouchon 16 est immobilisé en position montée par une goupille 96 qui traverse un trou 98 du boîtier 12 et un trou 100 formé dans un prolongement radial 102 du corps 90 du bouchon 16.

Le prolongement 102 comporte une lumière débou-chante dans laquelle peut coulisser l'extrémité 84 du pêne.

Le coulisseau 82 du pêne 80 est reçu en coulissement dans une rainure 104 formée dans la face radiale d'extrémité 92 du corps 90 du bouchon 16.

Le fond 106 du bouchon 16 comporte un trou centré 108 pour le passage de la tige de sortie 52 de l'organe de sortie 46 qui traverse également, avec jeu, une lumière 110 formée dans le coulisseau 82, la lumière s'étendant parallèlement aux bords parallèles de la rainure 104 qui détermine une direction D de coulissement radial du coulisseau 82 par rapport au bouchon 16 et donc par rapport au boîtier 12.

Le coulisseau 82 est en permanence sollicité élastiquement vers sa position illustrée sur la figure 2, qui est la position de verrouillage de la colonne de direction dans laquelle l'extrémité 84 fait saillie et est reçue dans un trou complémentaire non représenté appartenant à un organe rotatif 114 de la colonne de direction.

Cette position de verrouillage est déterminée par la venue en butée de l'extrémité transversale 116 du coulisseau avec le fond en vis-à-vis 118 de la rainure 104.

Le coulisseau 82 est sollicité élastiquement vers cette position de verrouillage par un ressort hélicoïdal de compression 120 qui prend appui d'une part contre une surface d'appui 122 formée dans l'autre fond 130 de la rainure et qui prend appui d'autre part contre le fond 132 d'un logement formé à cet effet dans le coulisseau 82.

Comme on peut le voir aux figures 2 et 5, le coulisseau 82 est un élément en forme générale de plaque qui comporte au voisinage de son extrémité tournée vers le fond 130 de la rainure 104 une partie en surépaisseur 138 qui s'étend axialement en direction de l'organe de sortie 46.

La partie en surépaisseur 138 est délimitée axialement par une face radiale 140 qui, en position assemblée des composants, constitue la surface de butée pour l'appui axial de la portion en vis-à-vis de la face radiale d'extrémité 50 de l'organe de sortie 46.

La partie en surépaisseur 138 comporte également un profil de came 142 qui est pour l'essentiel constitué par un tronçon rectiligne 144, en considérant la figure 2, qui se prolonge par un tronçon en arc de cercle 146 centré autour de l'axe X-X et avec lequel est susceptible de coopérer le bec 56 du maneton 54 de l'organe de sortie 46 comme cela sera expliqué par la suite.

Le coulisseau 82 du pêne 80 est également équipé d'un doigt de blocage 148 qui est monté coulissant axialement dans un trou 150 formé dans la partie en surépaisseur 138 et qui est sollicité en permanence axialement par un ressort hélicoïdal de compression 152 vers la face radiale d'extrémité 50 de l'organe de sortie 46.

Le doigt de blocage 148 comporte un corps 154 pour son guidage dans le trou 150.

Un ressort hélicoïdal de compression 156 est interposé axialement entre la face radiale d'extrémité 50 de l'organe de sortie 46 et une portion en vis-à-vis 158 du fond 106 du bouchon 16 de manière à solliciter axialement en permanence le verrou 14 selon une direction tendant à éloigner la face radiale d'extrémité 50 de l'organe de sortie 46 du coulisseau 82.

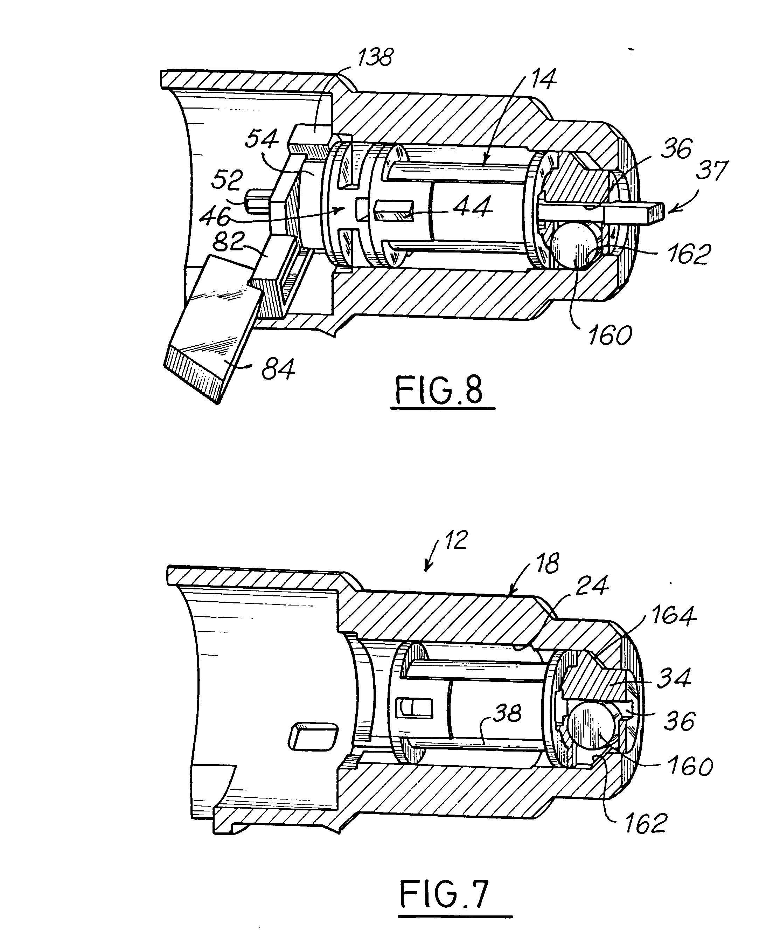

Comme on peut le voir sur la figure 7, un galet 160 s'étend en regard de la fente 36, lorsqu'une clef 37 n'est pas introduite ainsi qu'en regard d'une rampe 162 formée en vis-à-vis dans une portion de diamètre réduit du logement cylindrique 24 de la partie 18 du boîtier 12 qui reçoit à rotation le face radiale d'extrémité 38.

Lorsqu'une clef 37 est introduite dans la fente 36, et comme cela est illustré sur la figure 8, elle repousse radialement le galet 160 vers l'extérieur qui, en coopérant avec la rampe 162, provoque une translation axiale, de la droite vers la gauche en considérant les figures 7 et 8 de l'ensemble du verrou 14 à l'encontre de l'effort de rappel qui lui est appliqué par le ressort 152.

L'ensemble du verrou 14 est alors susceptible d'occuper une position de repos, illustrée sur la figure 7 dans laquelle il est en appui par une portion de surface conique 164 contre une surface de portion complémentaire formée dans le logement 24 et une position axiale active illustrée sur la figure 8.

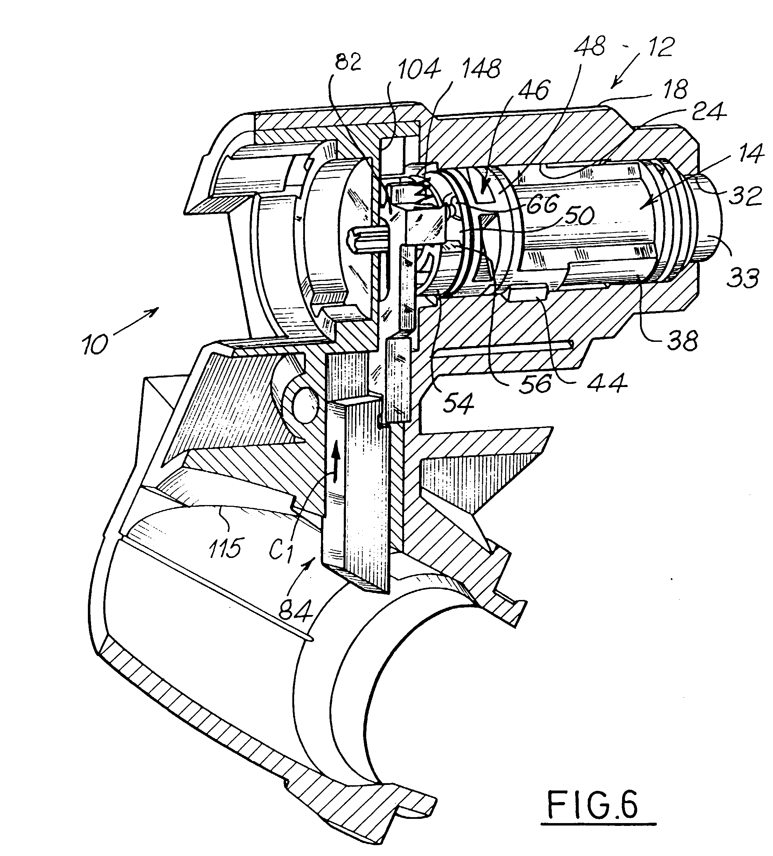

On décrira maintenant le mode de fonctionnement de l'antivol 10 en se référant notamment aux figures 6 à 12.

Dans la position de repos illustrée sur la figure 6, et en l'absence de clef, l'antivol est en position de verrouillage de la colonne de direction, c'est-à-dire que l'extrémité 84 du pêne fait saillie radialement dans une chambre 115 du boîtier 12 destiné à recevoir un élément rotatif 114 de la colonne de direction.

Dans cette position, qui correspond également à la position illustrée sur la figure 2, le bec 56 du maneton 54 de l'organe de sortie 46 du verrou 14 s'étend en regard de la partie 144 de la came 142 tandis que le doigt de blocage 148 est reçu dans le logement de blocage 66.

Si un voleur tente par effraction d'agir sur l'extrémité 84 du pêne, pour déplacer ce dernier en coulissement radial selon la direction C1 de la figure 6, il en est empêché car le doigt de blocage 148 est reçu dans le logement de blocage 66 et il vient immédiatement en butée contre le bord 70 du logement empêchant tout déplacement selon la direction C1 du coulisseau 82 et donc de l'extrémité 84 du pêne, l'organe de sortie 46 du verrou 14 étant bien entendu immobilisé en rotation par rapport au boîtier 12, en l'absence d'une clef conforme.

Lorsque le conducteur introduit une clef conforme 37 dans la fente 36 il provoque le déplacement axial du verrou 14 de la position de repos illustrée à la figure 7 vers la position active illustrée à la figure 8 comme cela a été expliqué précédemment.

Tant que le conducteur n'a pas agit en rotation sur la clef 37, le pêne 82, 84 occupe toujours sa position de verrouillage illustrée sur la figure 6.

A partir de la position illustrée à la figure 6 puis avoir introduit la clef comme cela est illustré sur la figure 8, le conducteur provoque la rotation de l'organe de sortie 46 dans le sens horaire en considérant la figure 8.

Lors de cette rotation, le doigt de blocage 148 vient coopérer progressivement avec la rampe 74 du logement de blocage 66 ce qui provoque dans un premier temps son effacement axial à l'intérieur du trou 150 à l'encontre de l'effort de rappel qui lui est appliqué par le ressort 152.

Cet effacement se poursuit jusqu'à ce que le doigt de blocage 148 sorte, selon une direction globalement radiale, hors du logement de blocage 66 et au-delà de la surface cylindrique convexe 49 de la partie principale 48 de l'organe 46.

Au cours de cette rotation, le bec 56 du maneton 54 est venu coopérer avec le profil de came 142 formé sur la partie en surépaisseur 138 du coulisseau 82.

Cette coopération qui débute par la venue en contact du bec 56 avec la partie 144 du profil de came 142 provoque le déplacement en coulissement du coulisseau 82 par rapport au bouchon 16, de la droite vers la gauche en considérant la figure 2 ce qui provoque le retrait de l'extrémité 84 du pêne à l'intérieur du boîtier et la libération en rotation de la colonne de direction.

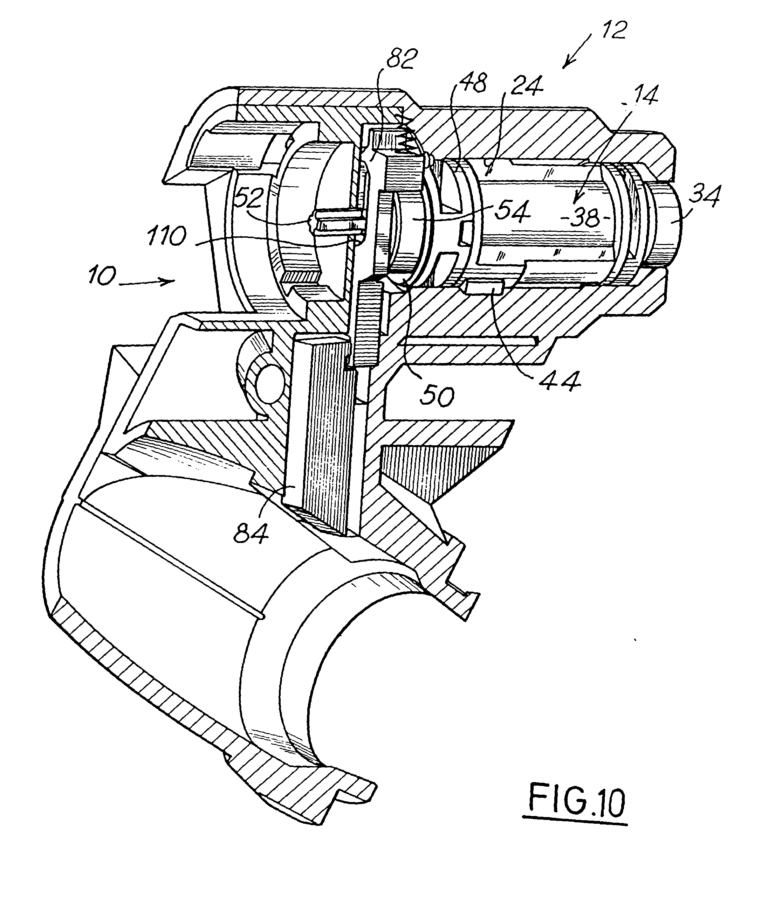

A la fin de ce mouvement de rotation vers la position d'utilisation, également appelée position accessoire, le bec 56 du maneton 54 coopère avec la portion cylindrique 146 du profil de came 142 pour retenir le coulisseau 82, le doigt de blocage 148 s'étendant axialement en regard de la portion de surface cylindrique 49 comme on peut le voir sur la figure 9 mais n'étant pas en appui contre cette dernière (voir figures 9 et 10).

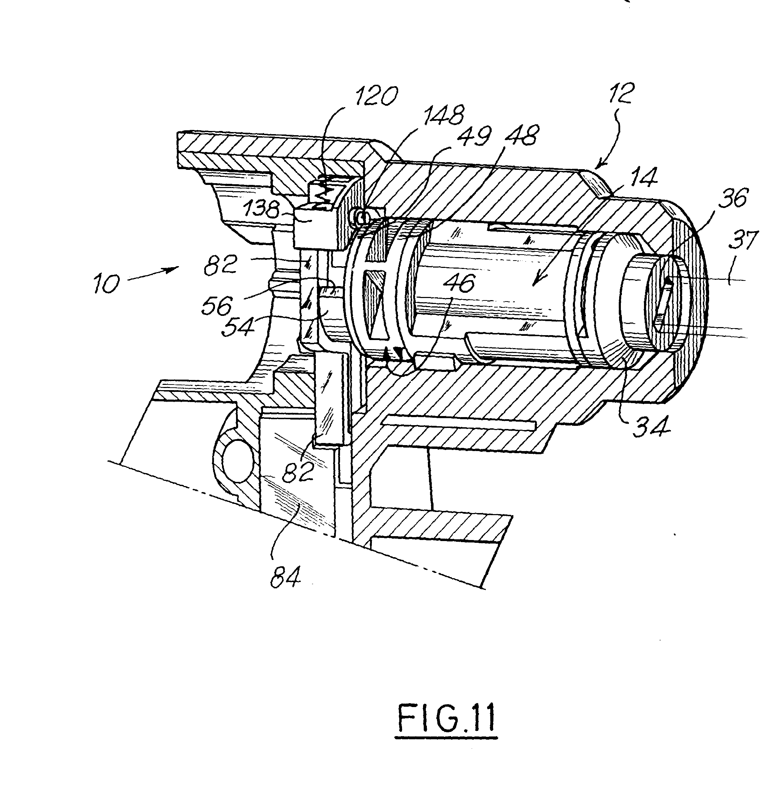

Lorsque le conducteur ramène la clef 37, et donc le verrou 14, vers sa position de repos comme cela est illustré à la figure 11, le maneton 54 avec son bec 56 n'agissent plus sur la portion en surépaisseur 138 du coulisseau 82 et ce dernier est alors retenu radialement à l'encontre de l'effort exercé par le ressort de rappel 120 du fait de la coopération du doigt de verrouillage 148 qui est en appui contre la portion de surface cylindrique convexe 49 de la partie principale 48 de l'organe de sortie 46.

Dans cette position, le coulisseau est toujours en position haute, en considérant les figures, c'est-à-dire que l'extrémité 84 du pêne est en position escamotée dans le boîtier.

Lorsque le conducteur extrait la clef 37 de la fente 36 du rotor 34 du verrou 14, en partant de la position illustrée sur la figure 11, il provoque immédiatement, sous l'action du ressort de rappel axial 156, le retour axial, de la gauche vers la droite en considérant la figure 11 du verrou 14 vers sa position de repos illustrée à la figure 7.

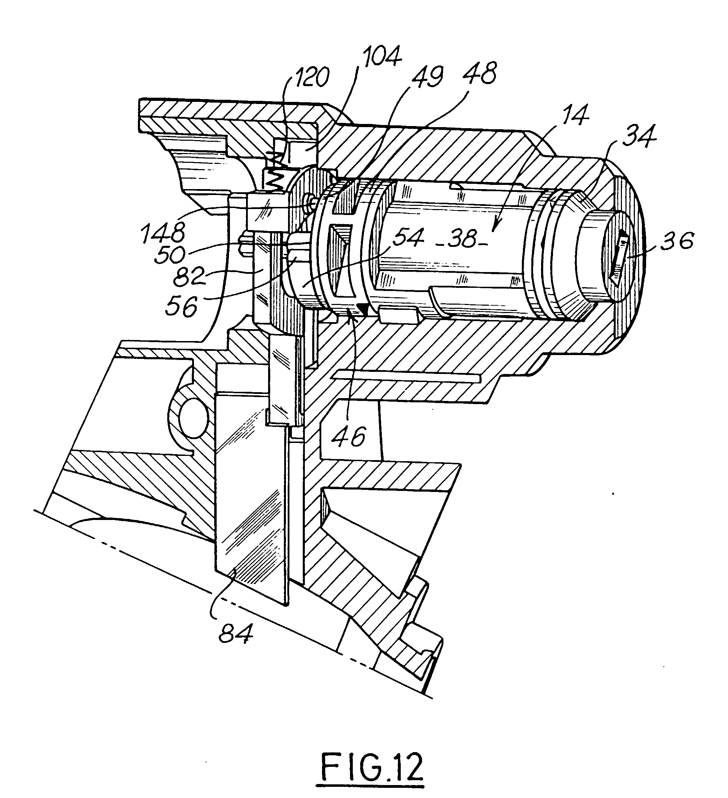

Du fait de ce déplacement axial entre la position active et la position de repos du verrou 14 selon une course supérieure à l'extension axiale maximale du doigt de blocage 148 hors du trou 150 et en vis-à-vis de la portée 49, le doigt de blocage 148 se trouve instantanément dans le vide, c'est-à-dire qu'il n'est plus retenu par la portion de surface cylindrique 49 comme cela est illustré sur la figure 12.

Simultanément, et du fait de l'action du ressort de rappel 120, le coulisseau 82 coulisse dans la rainure 104 pour retourner vers sa position de verrouillage illustrée aux figures 2 et 6, le doigt de blocage 148 s'étendant à nouveau axialement en regard du logement de blocage 66 formé dans la face radiale d'extrémité 50 de la partie 48 de l'organe de sortie 46.

## Revendications

1. Antivol (10) de direction de véhicule automobile du type comportant un boîtier (12) dans lequel un verrou (14) est monté à rotation entre une position de repos dans laquelle une clef conforme (37) peut être introduite ou retirée axialement, et au moins une position d'utilisation dans laquelle la clef (37) ne peut être extraite du verrou (14), le verrou comportant un organe de sortie rotatif (46) qui commande les déplacements d'un pêne (80, 82, 84) qui est monté coulissant dans le boîtier (12, 16), selon une direction radiale entre une position de verrouillage vers laquelle il est sollicité élastiquement et dans laquelle il fait saillie radialement dans une ouverture du boîtier pour bloquer en rotation un organe de la colonne de direction lorsque le verrou (14) est en position de repos, clef extraite et une position escamotée à l'intérieur du boîtier, du type dans lequel le verrou (14) est monté coulissant axialement dans le boîtier (18, 24) entre une position de repos vers laquelle il est rappelé élastiquement et qu'il occupe en l'absence de clef (37), et une position active qu'il occupe lorsqu'une clef (37) est en position introduite dans le verrou (14), du type dans lequel l'organe de sortie (46) comporte un maneton (54) qui est susceptible de coopérer avec une came de commande (142) formée sur le pêne (80, 82) pour commander les déplacements de ce dernier, et du type dans lequel le pêne (80, 82, 84) comporte un doigt de blocage (148) qui fait saillie axialement, caractérisé en ce que le doigt de blocage (148) fait saillie axialement pour être reçu dans un logement de blocage (66) formé dans une face radiale d'extrémité (50) en vis-à-vis de l'organe de sortie (46, 48) lorsque le pêne (80, 82, 84) est en position de verrouillage pour empêcher tout déplacement du pêne vers sa position escamotée, et en ce que le doigt de blocage (148) est susceptible de s'effacer lors de la rotation du verrou (14) depuis sa position de repos vers sa position d'utilisation.

2. Antivol selon la revendication 1, caractérisé en ce que le doigt de blocage (148) est monté coulissant axialement dans le pêne (82) à l'encontre d'un ressort de rappel (152) qui le sollicite en permanence en direction du logement de blocage.

3. Antivol selon l'une des revendications 1 ou 2, caractérisé en ce que le logement de blocage est un évidement (66) formé dans ladite face radiale d'extrémité (50) de l'organe de sortie (46) et qui comporte une rampe (74) qui provoque l'effacement du doigt de blocage (148) lors de ladite rotation du verrou (14) de manière que le doigt de blocage (148) sorte du logement (66) pour s'étendre alors axialement en regard d'une surface cylindrique (49) de retenue du pêne (82) formée sur l'organe de sortie (46, 48) et centrée sur l'axe de rotation (X-X) de ce dernier.

4. Antivol selon la revendication 3, caractérisé en ce que la course maximale d'extension axiale du doigt de blocage (148) est inférieure à la course axiale du verrou (14) entre sa position de repos et sa position active.

5. Antivol selon l'une quelconque des revendications précédentes, caractérisé en ce que la position axiale active du verrou (14) est déterminée par la venue en contact de ladite face radiale d'extrémité (50) de l'organe de sortie avec une surface de butée (140) formée en vis-à-vis sur le pêne (82).

6. Antivol selon l'une quelconque des revendications précédentes, caractérisé en ce que le maneton (54) est formé en saillie sur ladite face radiale d'extrémité (50) de l'organe de sortie (46).

7. Antivol selon la revendication 6 prise en combinaison avec la revendication 5, caractérisé en ce que ladite surface de butée (140) est une portion de surface radiale formée sur une partie en surépaisseur axiale (138) du pêne (82), et en ce que ladite came (142) de commande des déplacements du pêne (82) est formée sur cette partie en surépaisseur (138).

8. Antivol selon l'une quelconque des revendications précédentes, caractérisé en ce qu'un ressort hélicoïdal de compression (156) est agencé axialement entre une portion de surface (158) du boîtier et la dite surface radiale d'extrémité (50) de l'organe de sortie (46) pour rappeler le verrou vers sa position de repos.

9. Antivol selon l'une quelconque des revendications précédentes, caractérisé en ce que l'organe de sortie (46) comporte une tige coaxiale de sortie (52) qui s'étend axialement à travers la lumière (110) du pêne (82) qui s'étend parallèlement à la direction de coulissement du pêne.

## Patentansprüche

1. Lenkradschloß (10) für ein Kraftfahrzeug mit einem Gehäuse (12), in dem ein Riegel (14) zwischen einer Ruhestellung, in der ein entsprechender Schlüssel (37) axial einsteck- oder abziehbar ist, und mindestens einer Einsatzstellung, in welcher der Schlüssel (37) nicht aus dem Riegel (14) abgezogen werden kann, drehbar angeordnet ist, wobei der Riegel (14) ein drehbares Austrittsorgan (46) umfaßt, das die Bewegung eines in dem Gehäuse (12, 16) radial verschiebbaren Sperrgliedes (80, 82, 84) steuert, wobei die Verschiebung des Sperrgliedes zwischen einer Verriegelungsstellung, in der er elastisch belastet ist und radial in einer Öffnung des Gehäuses einen Vorsprung bildet, um die Drehung eines Organs der Lenksäule zu verhindern, wenn sich der Riegel (14) in der Ruhestellung befindet und der Schlüssel abgezogen ist, und einer eingezogenen Stellung im Inneren des Gehäuses erfolgt, wobei der Riegel (14) zwischen einer Ruhestellung, in die er elastisch zurückgeführt wird und die er in Abwesenheit des Schlüssels (37) einnimmt, und einer aktiven Stellung, die er einnimmt, wenn der Schlüssel (37) in den Riegel (14) gesteckt ist, in dem Gehäuse (18, 24) axial verschiebbar angeordnet ist, wobei das Austrittsorgan (46) einen Zapfen (54) umfaßt, der in der Lage ist, mit einem Betätigungsnocken (142) zusammenzuwirken, der auf dem Sperrglied (80, 82) ausgebildet ist, um Verschiebungen dieses Letztgenannten zu steuern, und wobei das Sperrglied (80, 82, 84) einen Sperrfinger (148) umfaßt, der einen axialen Vorsprung bildet, dadurch gekennzeichnet, daß der Sperrfinger (148) axial hervorsteht, um in einen Sperrsitz (66) aufgenommen zu werden, der in einer radialen Endfläche (50) gegenüber dem Austrittsorgan (46, 48) ausgebildet ist, wenn sich das Sperrglied (80, 82, 84) in der Verriegelungsstellung befindet, um jede Verschiebung des Sperrgliedes in seine eingezogene Stellung zu verhindern, und daß der Sperrfinger (148) in der Lage ist, sich bei der Drehung des Riegels (14) aus seiner Ruhestellung in seine Einsatzstellung zurückzuziehen.

2. Lenkradschloß nach Anspruch 1, dadurch gekennzeichnet, daß der Sperrfinger (148) gegen den Druck einer Rückholfeder (152) axial verschiebbar in dem Sperrglied (82) angeordnet ist, die ihn ständig in Richtung auf den Sperrsitz belastet.

3. Lenkradschloß nach Anspruch 1 oder 2, dadurch gekennzeichnet, daß es sich bei dem Sperrsitz um eine Vertiefung (66) handelt, die in der genannten radialen Endfläche (50) des Austrittsorgans (46) ausgebildet ist und die eine schiefe Ebene (74) umfaßt, welche das Zurückziehen des Sperrfingers (148) während der genannten Drehung des Riegels (14) auf solche Weise bewirkt, daß der Sperrfinger (148) aus dem Sitz (66) austritt, um sich dann axial in bezug auf eine zylinderförmige Haltefläche (49) des Sperrgliedes (82) zu erstrecken, die auf dem Austrittsorgan (46, 48) ausgebildet und die um die Drehachse (X-X) dieses Letztgenannten zentriert ist.

4. Lenkradschloß nach Anspruch 3, dadurch gekennzeichnet, daß der maximale axiale Ausdehnungshub des Sperrfingers (148) kleiner ist als der axiale Hub des Riegels (14) zwischen seiner Ruhestellung und seiner aktiven Stellung.

5. Lenkradschloß nach einem der vorhergehenden Ansprüche, dadurch gekennzeichnet, daß die aktive axiale Stellung des Riegels (14) dadurch bestimmt ist, daß die genannte radiale Endfläche (50) des Austrittsorgans mit einer Anschlagfläche (140) in Berührung kommt, die auf der gegenüberliegenden Seite auf dem Sperrglied (82) ausgebildet ist.

6. Lenkradschloß nach einem der vorhergehenden Ansprüche, dadurch gekennzeichnet, daß der Zapfen (54) vorspringend auf der genannten radialen Endfläche (50) des Austrittsorgans (46) ausgebildet ist.

7. Lenkradschloß nach Anspruch 6 in Verbindung mit Anspruch 5, dadurch gekennzeichnet, daß es sich bei der genannten Anschlagfläche (140) um einen Teil einer radialen Fläche handelt, die auf einem axialen Teil (138) des Sperrgliedes (82) in Überdicke ausgebildet ist, und daß der Nocken (142) für die Betätigung der Verschiebungen des Sperrgliedes (82) auf diesem überdicken Teil (138) ausgebildet ist.

8. Lenkradschloß nach einem der vorhergehenden Ansprüche, dadurch gekennzeichnet, daß eine Schraubendruckfeder (156) axial zwischen einem Teil der Oberfläche (158) des Gehäuses und der genannten radialen Endfläche (50) des Austrittsorgans (46) angeordnet ist, um den Riegel in seine Ruhestellung zurückzuholen.

9. Lenkradschloß nach einem der vorhergehenden Ansprüche, dadurch gekennzeichnet, daß das Austrittsorgan (46) einen koaxialen Austrittsstift (52) umfaßt, der sich axial durch die Öffnung (110) des Sperrgliedes (82) erstreckt, welche sich parallel zu der Gleitrichtung des Sperrgliedes erstreckt.

## Claims

1. A motor vehicle anti-theft steering lock device (10), of the type comprising a casing (12) in which a lock (14) is mounted for rotation between a rest position, in which a correct key (37) can be introduced or withdrawn axially, and at least one working position in which the key (37) cannot be extracted from the lock (14), the lock including a rotary output member which controls the displacements of a bolt (80, 82, 84) which is mounted for sliding movement in the casing (12, 16) in a radial direction between a locking position, towards which it is urged elastically and in which it projects radially into an aperture of the casing so as to block a component of the steering column against rotation when the lock (14) is in its rest position with the key extracted, and a position in which the bolt is retracted into the interior of the casing, of the type in which the lock (14) is mounted for axial sliding movement in the casing (18, 24) between a rest position, towards which it is elastically biased and which it occupies in the absence of any key (37), and a working position which it occupies when a key (37) is in position having been introduced into the lock (14), of the type in which the output member (46) includes a crank element (54) which is adapted to cooperate with a control cam (142) formed on the bolt (80, 82) for controlling the displacements of the latter, and of the type in which the bolt (80, 82, 84) includes an axially projecting stop finger (148), characterised in that the stop finger (148) projects axially so as to be received in a stop recess (66) formed in a facing radial end face (50) of the output member (46, 48) when the bolt (80, 82, 84) is in its locking position, whereby to prevent any displacement of the bolt towards its retracted position, and in that the stop finger (148) is adapted to retract during rotation of the lock (14) from its rest position towards its working position.

2. An anti-theft device according to Claim 1, characterised in that the stop finger (148) is mounted for axial sliding movement in the bolt (82) against a return spring (152) which permanently biases it towards the stop recess.

3. An anti-theft device according to Claim 1 or Claim 2, characterised in that the stop recess is a cavity (66) formed in the said radial end face (50) of the output member (46), and which includes a ramp (74) that causes the stop finger (148) to be retracted during the said rotation of the lock (14), whereby the stop finger (148) leaves the recess (66) so as then to lie in axial facing relationship with a cylindrical surface (49) for retaining the bolt (82), formed on the output member (46, 48) and centred on the axis of rotation (X-X) of the latter.

4. An anti-theft device according to Claim 3,
characterised in that the maximum travel in axial displacement of the stop finger (148) is shorter than the axial travel of the lock (14) between its rest position and its working position.

5. An anti-theft device according to any one of the preceding Claims, characterised in that the working axial position of the lock (14) is determined by the said radial end face (50) of the output member coming into contact with an abutment surface (140) formed, in facing relationship with it, on the bolt (82).

6. An anti-theft device according to any one of the preceding Claims, characterised in that the crank element (54) is formed in projecting relationship on the said radial end face (50) of the output member (46).

7. An anti-theft device according to Claim 6 taken in combination with Claim 5, characterised in that the said abutment surface (140) is a radial surface portion formed on an axially thickened portion (138) of the bolt (82), and in that the said cam (142) for controlling displacements of the bolt (82) is formed on the said thickened portion (138).

8. An anti-theft device according to any one of the preceding Claims, characterised in that a helical compression spring (156) is arranged radially between a surface portion (158) of the housing and the said radial end face (50) of the output member (46), for returning the lock to its rest position.

9. An anti-theft device according to any one of the preceding Claims, characterised in that the output member (46) includes a coaxial output rod (52) which extends axially through the window (110) of the lock (82) that extends parallel to the direction of sliding movement of the bolt.
